# DEMANDE DE BREVET EUROPEEN

(11) **EP 1 447 649 A1**
(43) Date de publication de la demande: **18.08.2004**
(21) Numéro de dépôt: 04300034.8
(22) Date de dépôt: 22.01.2004
(51) Int. Cl.: G01F 3/08, G01F 15/18, F16J 15/06

(54) **Joint d'étanchéité de compteur de fluide et compteur équipé d'un tel joint**

(30) Priorité: 31.01.2003 FR 0301141
(71) Demandeur: Actaris SAS, 92100 Boulogne (FR)
(72) Inventeur: Roberjot, Eric, 71000 Macon (FR); Depeyre, Christophe, 71000 Macon (FR)
(74) Mandataire: Lenne, Laurence

(57) **Abrégé**

La présente invention concerne un joint d'étanchéité (7) destiné être monté dans une rainure (8) autour d'une ouïe (5) d'une chambre de mesure (1) insérée selon une direction dite d'insertion dans une bâche (2) pour former un compteur de fluide, constitué d'un tore élastique radialement et de forme correspondante à celle de ladite ouïe.

Selon l'invention, il comporte un agencement de blocage dans une direction opposée à ladite direction agencé sur au moins un de ses côtés sensiblement parallèles à la direction d'insertion.

## Description

La présente invention concerne un joint d'étanchéité de compteur de fluide et un compteur équipé d'un tel joint.

Elle se rapporte en particulier à un compteur d'eau à chambre de mesure volumétrique.

Un tel compteur connu comporte un carter ou bâche pourvu d'une conduite d'arrivée et d'une conduite de sortie dans lequel est insérée une chambre de mesure volumétrique du type à piston oscillant. Cette chambre de mesure est pourvue d'au moins une ouïe d'entrée et d'au moins une ouïe de sortie. Un tel compteur est bien connu de l'homme du métier.

Dans certaines conformations de cette chambre de mesure, l'ouïe d'entrée ou l'ouïe de sortie est conformée sur la paroi latérale de l'enveloppe de la chambre sur une hauteur déterminée. Cette ouïe doit être connectée de façon étanche à la conduite d'arrivée ou de sortie correspondante et, pour ce faire, un joint est mis en place dans une rainure agencée sur la face externe de l'enveloppe de la chambre autour de l'ouïe. Une fois la chambre de mesure mise en place dans la bâche, ce joint est serré dans la fente existant entre chambre de mesure et bâche et assure le passage étanche du fluide entre ouïe et conduite correspondante.

De façon connue, ce joint est torique de forme correspondante à celle de l'ouïe, généralement rectangulaire.

Le montage est effectué par mise en place du joint dans sa rainure sur la chambre de mesure puis insertion de la chambre de mesure dans la bâche.

Afin de réaliser l'étanchéité, le joint est à l'état de repos de diamètre supérieur à la largeur de la fente existant entre chambre de mesure et bâche. Il est donc soumis lors de l'insertion de la chambre de mesure à des efforts de direction opposée à la direction d'insertion de la chambre de mesure dans la bâche. Ces efforts relativement importants peuvent avoir pour conséquences de chasser le joint hors de la rainure, le joint se détachant de la chambre de mesure qui risque d'être assemblée à la bâche sans étanchéité rendant le compteur hors usage, de le déformer dans une direction opposée à la direction d'insertion et même de le couper. Ces problèmes sont incompatibles avec un assemblage du compteur en grande série.

L'invention résout ces problèmes et, pour ce faire, elle propose un joint d'étanchéité destiné à être monté dans une rainure autour d'une ouïe d'une chambre de mesure insérée selon une direction dite d'insertion dans une bâche pour former un compteur de fluide, constitué d'un tore élastique radialement et de forme correspondante à celle de ladite ouïe, caractérisé en ce qu'il comporte un agencement de blocage dans une direction opposée à ladite direction d'insertion agencé sur au moins un de ses côtés sensiblement parallèles à la direction d'insertion.

L'invention a également pour avantage de maintenir le joint en place sur la chambre mesurante ou sur la bâche lors de la manutention de celle-ci avant montage.

De plus, le montage devient compatible avec les contraintes d'assemblage en grande série quant à la qualité et la productivité, sans ajout d'opérations autre que l'insertion par emmanchement de la chambre de mesure dans la bâche.

De préférence, ledit agencement de blocage est constitué d'au moins un tronçon de joint sensiblement perpendiculaire à ladite direction d'insertion et dans ce cas il peut être constitué d'au moins un tronçon de joint en forme de U solidaire du joint par ces deux branches.

L'invention concerne également un compteur de fluide comportant une chambre de mesure insérée selon une direction dite d'insertion dans une bâche et comportant au moins une ouïe, compteur comportant un joint comme précisé monté dans une rainure conformée de deux parois solidaires de la chambre de mesure ou de la bâche autour de l'ouïe, caractérisé en ce que ledit agencement de blocage est emboîté dans au moins une ouverture d'une desdites parois de la rainure.

Selon un mode de réalisation préféré ledit agencement de blocage est constitué d'au moins un tronçon de joint sensiblement perpendiculaire à ladite direction d'insertion et emboîté dans ladite ouverture et dans ce cas il peut être constitué d'au moins un tronçon de joint en forme de U solidaire du joint par ces deux branches emboîtées dans deux dites ouvertures.

Avantageusement, ladite rainure est portée par la paroi extérieure de la chambre de mesure.

L'invention est décrite ci-après plus en détail à l'aide de figures ne représentant qu'un mode de réalisation préféré de l'invention.

La figure 1 est une vue d'un compteur conforme à l'invention avant assemblage.

La figure 2 est une vue d'un compteur conforme à l'invention lors de son assemblage.

La figure 3 est une vue en perspective d'un joint d'étanchéité conforme à l'invention.

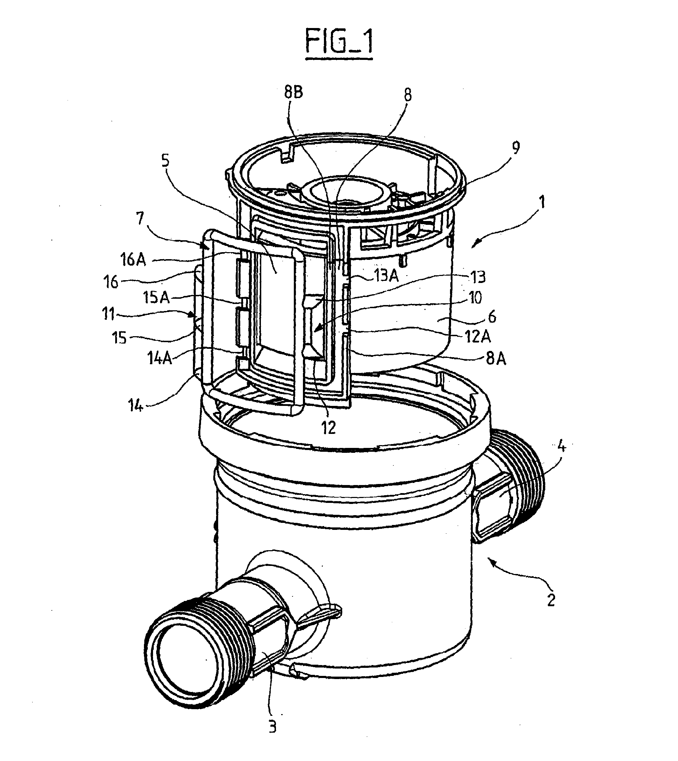

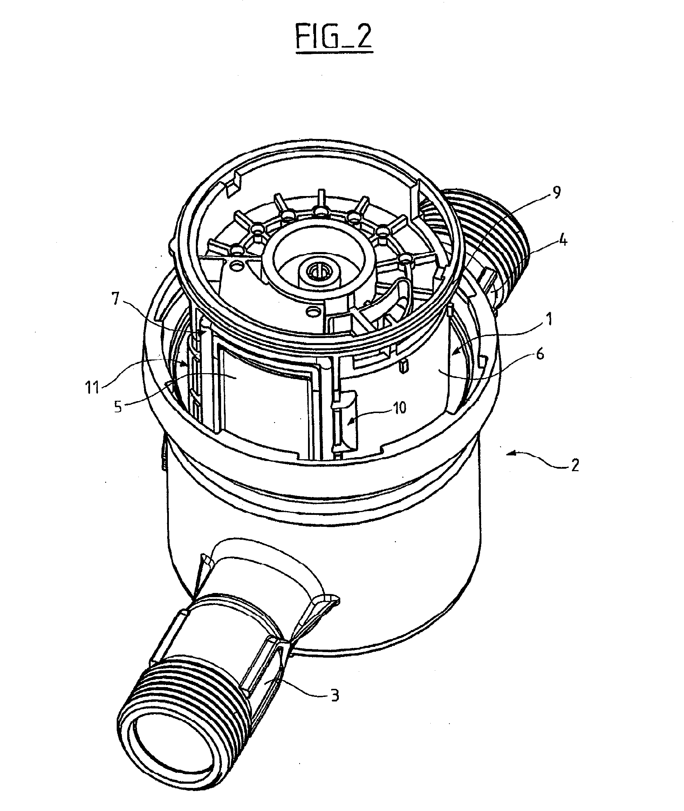

Comme représenté sur les figures 1 et 2, un compteur de fluide comporte une chambre de mesure 1 volumétrique du type à piston oscillant insérée selon une direction dite d'insertion dans une bâche 2, portant une conduite d'arrivée 3 et une conduite de sortie 4.

L'enveloppe externe 6 et le couvercle 9 de la chambre mesurante forment une ouïe 5 conformée donc sur la paroi latérale de la chambre sur une hauteur déterminée et devant être connectée de façon étanche à la conduite d'arrivée 3 et, pour ce faire, un joint 7 constitué d'un tore élastique radialement et de forme générale rectangulaire comme l'ouïe est mis en place dans une rainure 8 agencée sur la face externe de l'enveloppe 6 de la chambre autour de l'ouïe 5.

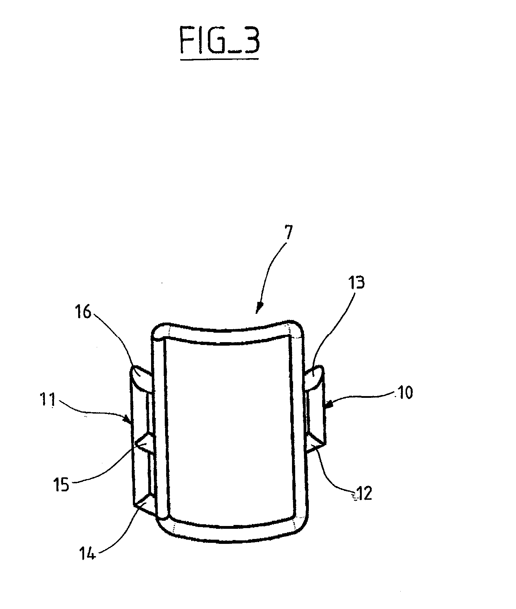

Selon l'invention et particulièrement visible sur la figure 3, le joint 7 comporte un agencement de blocage dans une direction opposée à la direction d'insertion agencé sur ses côtés sensiblement parallèles à la direction d'insertion. Cet agencement de blocage est constitué de tronçons de joint 12 à 16 sensiblement perpendiculaires à la direction d'insertion, plus précisément ici perpendiculaires aux côtés correspondants du joint torique, formés par les branches d'au moins un tronçon de joint 10, 11 en forme de U solidaire du joint par ces deux branches, l'âme de ce tronçon en U rigidifiant l'agencement de blocage.

Avantageusement et comme représenté sur les figures, dans un but de détrompage, les deux tronçons de joint 10, 11 en forme de U sont asymétriques, afin de permettre le montage dans le bon sens du joint. Ceci est particulièrement important en cas d'assemblage en grande série.

La rainure est conformée de deux parois 8A, 8B issues de moulage sur l'enveloppe extérieure 6 et le couvercle 9 de la chambre de mesure autour de l'ouïe 5. La paroi extérieure 8A de la rainure présente des ouvertures 12A à 16A.

Le montage des différentes pièces s'effectue tout d'abord par emboîtement du joint 7 dans la rainure 8 avec emboîtement des tronçons de joint 12 à 16 dans les ouvertures 12A à 16A correspondantes. Le joint est alors bloqué dans une direction parallèle à l'axe de symétrie de la chambre de mesure 1.

Puis la chambre de mesure 1 équipée de ce joint 7 est insérée comme représenté sur la figure 2 dans une direction d'insertion parallèle à son axe de symétrie dans la bâche 2.

Dans ce qui précède a été décrit le cas d'une ouïe d'entrée 5 devant communiquer avec la conduite d'arrivée 3 de la bâche, mais l'invention s'applique bien sûr également au cas d'une ouïe de sortie d'un même type devant communiquer avec la conduite de sortie 4 de la bâche.

Par ailleurs selon le mode de réalisation décrit, le joint est monté dans une rainure portée par la chambre de mesure, mais cette rainure peut être portée par la bâche selon le même principe.

## Revendications

1. Joint d'étanchéité (7) destiné être monté dans une rainure (8) autour d'une ouïe (5) d'une chambre de mesure (1) insérée selon une direction dite d'insertion dans une bâche (2) pour former un compteur de fluide, constitué d'un tore élastique radialement et de forme correspondante à celle de ladite ouïe, **caractérisé en ce qu'**il comporte un agencement de blocage dans une direction opposée à ladite direction agencé sur au moins un de ses côtés sensiblement parallèles à la direction d'insertion.

2. Joint selon la revendication 1, **caractérisé en ce que** ledit agencement de blocage est constitué d'au moins un tronçon de joint (12 à 16) sensiblement perpendiculaire à ladite direction d'insertion.

3. Joint selon la revendication 2, **caractérisé en ce que** ledit agencement de blocage est constitué d'au moins un tronçon de joint en forme de U (10, 11) solidaire du joint par ces deux branches.

4. Compteur de fluide comportant une chambre de mesure (1) insérée selon une direction dite d'insertion dans une bâche (2) et comportant au moins une ouïe (5), compteur comportant un joint (7) selon l'une des revendications précédentes monté dans une rainure (8) conformée de deux parois (8A, 8B) solidaires de la chambre de mesure ou de la bâche autour de l'ouïe, **caractérisé en ce que** ledit agencement de blocage est emboîté dans au moins une ouverture (12A à 16A) d'une desdites parois (8A) de la rainure.

5. Compteur selon la revendication 4, **caractérisé en ce que** ledit agencement de blocage est constitué d'au moins un tronçon de joint (12 à 16) sensiblement perpendiculaire à ladite direction d'insertion et emboîté dans ladite ouverture.

6. Compteur selon la revendication 5, **caractérisé en ce que** ledit agencement de blocage est constitué d'au moins un tronçon de joint en forme de U (10, 11) solidaire du joint par ces deux branches emboîtées dans deux dites ouvertures.

7. Compteur selon l'une des revendications 4 à 6, **caractérisé en ce que** ladite rainure (8) est portée par la paroi extérieure de la chambre de mesure (1).
